# EUROPÄISCHE PATENTSCHRIFT

(11) **EP 4 301 632 B1**
(45) Veröffentlichungstag und Bekanntmachung des Hinweises auf die Patenterteilung: **01.04.2026**
(21) Anmeldenummer: 22709669.0
(22) Anmeldetag: 24.02.2022
(51) Int. Cl.: B60R 22/26, B60N 2/68, B60R 22/34

(54) **LASTTRAGENDER GURTAUFROLLER**
LOAD CARRYING BELT RETRACTOR
ENROULEUR DE CEINTURE DE TRANSPORT DE CHARGE

(30) Priorität: 02.03.2021 DE 102021105013
(43) Veröffentlichungstag der Anmeldung: 10.01.2024
(73) Patentinhaber: Autoliv Development AB, 447 83 Vårgårda (SE)
(72) Erfinder: DAHLQUIST, Bengt, 44156 Alingsås (SE); SÖHNCHEN, Arndt, 22765 Hamburg (DE); PETTERSSON, Lennart, 56436 Bankeryd (SE); JABUSCH, Ronald, 25336 Elmshorn (DE); LANGHOFF, Hans-Jörg, 25474 Bönningstedt (DE); GLÄSSER, Antto-Christian, 25474 Hasloh (DE); CIRSTEA, Alexandru, 25335 Elmshorn (DE); EHLERS, Jens, 25358 Horst (DE)
(74) Vertreter: Müller Verweyen
(86) Internationale Anmeldenummer: PCT/EP2022/054609
(87) Internationale Veröffentlichungsnummer: WO 2022/184535

(56) Entgegenhaltungen:
- WO-A1-2021/023538
- DE-A1- 102018 213 279
- FR-A1- 3 089 179

## Beschreibung

Die vorliegende Erfindung betrifft einen lasttragenden Gurtaufroller für eine Sitzstruktur eines Fahrzeugsitzes mit den Merkmalen des Oberbegriffs von Anspruch 1.

Fahrzeugsitze mit integrierten Sicherheitsgurteinrichtungen sind z.B. in der Verwendung als Vordersitze in Cabriolets bekannt, bei denen wenigstens die Gurtaufroller der Sicherheitsgurteinrichtungen in den Rückenlehnen der Fahrzeugsitze befestigt sind. Die Gurtaufroller werden in diesem Fall mangels einer lasttragenden B-Säule und aus Gründen des Zuganges zu den hinteren Sitzen bzw. aus Gründen der Entfernung zu der hinteren Fahrzeugstruktur bevorzugt in die Rückenlehnen der Fahrzeugsitze integriert, welche damit auch zur Aufnahme der im Rückhaltefall wirkenden Zugkräfte ausgelegt werden müssen. Die Gurtaufroller selbst sind in ihrem Grundaufbau identisch mit Standardgurtaufrollern und werden nur mit verschiedenen speziell für den Einbau in die Rückenlehnen vorgesehenen Zusatzbaugruppen, wie z.B. einem sich selbst ausrichtenden Trägheitssensor versehen.

Ein Fahrzeugsitz weist in seinem Grundaufbau eine Sitzstruktur aus mehreren lasttragenden Strukturteilen auf, welche zur Befestigung des Fahrzeugsitzes an der Fahrzeugstruktur dienen. Die Sitzstruktur ist zur Verbesserung des Sitzkomforts mit Federn und einer Polsterung versehen und dient außerdem zur Befestigung weiterer Bauteile wie z.B. verschiedene Sitzverstellmechanismen, einschließlich der zugehörigen Elektromotoren und weiterer Bauteile wie Heizeinrichtungen, Sensoren, Displays, Kopfstützen und dergleichen.

In modernen Fahrzeugen mit autonomen Fahrsystemen wird zunehmend eine vergrößerte Verstellbarkeit der Fahrzeugsitze in verschiedene Ausrichtungen und Stellungen gefordert, damit der Fahrzeuginsasse die durch das autonome Fahren gewonnenen Freiheiten z.B. zu einer vertieften Kommunikation mit den weiteren Insassen, zu verlängerten und intensiveren Ruhephasen oder auch zur Arbeit nutzen und den Fahrzeugsitz dazu entsprechend ausrichten kann. Dies hat zur Folge, dass die Sicherheitsgurteinrichtung und insbesondere der Gurtaufroller nicht mehr wie bisher an der Fahrzeugstruktur, sondern stattdessen am Fahrzeugsitz befestigt werden muss, wie dies z.B. auch schon bei den Vordersitzen in Cabriolets der Fall war.

Ein lasttragendes Strukturteil für einen Fahrzeugsitz, in dem ein Gurtaufroller angeordnet ist, ist beispielsweise aus der DE 10 2018 213 279 A1 bekannt. Aus der WO 2021/023538 A1 ist ein Gurtaufroller mit den Merkmalen des Oberbegriffs des Anspruchs 1 bekannt.

Vor diesem Hintergrund liegt der Erfindung die Aufgabe zugrunde, einen verbesserten, formstabilen und crashfesten Gurtaufroller für eine Sitzstruktur anzugeben, welcher eine einfache Montage ermöglicht.

Zur Lösung der Aufgabe wird ein lasttragender Gurtaufroller mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird nach Anspruch 1 ein lasttragender Gurtaufroller für eine Sitzstruktur eines Fahrzeugsitzes vorgeschlagen, wobei der Gurtaufroller zwei Gehäusehälften aufweist, zwischen denen Funktionsmodule des Gurtaufrollers angeordnet sind. Eines der Funktionsmodule ist eine Gurtspule mit einer Wickelachse, wobei an den Funktionsmodulen eine Mehrzahl von senkrecht zur Wickelachse orientierter Stützplatten vorgesehen ist, welche jeweils mindestens zwei Rastnasen aufweisen, wobei die Rastnasen in korrespondierende Rastlöcher in den zwei Gehäusehälften eingreifen. Es wird vorgeschlagen, dass die Gehäusehälften zu den Funktionsmodulen gerichtete Sicken und/oder Versteifungen aufweisen, wobei sich die Funktionsmodule und/oder die Stützplatten an den Sicken und/oder Versteifungen in mindestens einer Richtung parallel zur Wickelachse abstützt.

Die Sicken und Versteifungen in den Gehäusehälften nehmen durch die Abstützung der Funktionsmodule und/oder der Stützplatten Lasten parallel zur Wickelachse der Gurtspule auf und ermöglichen eine höhere Kraftübertragung in diese Richtung als Rastnasen. Die Rastnasen werden dadurch entlastet, was die Tragfähigkeit für weitere Lastfälle erhöht. Auf diese Weise kann zudem eine einfache und kostengünstige Möglichkeit zum Positionieren und Fixieren von Funktionsmodulen in dem Gurtaufroller erreicht werden, wobei gleichzeitig die Steifigkeit des Gehäuseteils bzw. des Gurtaufrollers erhöht werden kann.

Lasttragend bedeutet in diesem Zusammenhang, dass der Gurtaufroller neben der Einleitung von Kräften aus dem Sicherheitsgurt in eine Sitzstruktur auch Lasten der Sitzstruktur selbst aufnehmen und weiterleiten kann. Der Gurtaufroller ist daher geeignet als lasttragendes Strukturteil einer übergeordneten Sitzstruktur zu dienen.

Ein Funktionsmodul eines Gurtaufrollers ist insbesondere eine Gurtspule mit einem darauf zu einem Gurtwickel aufwickelbaren Sicherheitsgurt. Ein weiteres Funktionsmodul ist insbesondere eine Blockiereinrichtung.

Ein Funktionsmodul kann weiterhin jeweils ein reversibler Gurtstraffer, ein irreversibler Gurtstraffer, eine Kraftbegrenzungseinrichtung, eine Sensoreinrichtung oder auch eine Steuereinrichtung sein. Weiterhin kann ein Funktionsmodul ein Elektromotor sein, welcher für verschiedene Funktionen in dem Gurtaufroller vorgesehen sein kann.

Die zwischen den beiden Gehäusehälften angeordneten Funktionsmodule des Gurtaufrollers sind vorzugsweise koaxial oder axial und in Reihe zu der Gurtspule angeordnet. Hieraus ergibt sich eine platzsparende Bauweise in einem schmalen länglichen Bauraum, wodurch der Gurtaufroller einfach in der Rückenlehne eines Fahrzeugsitzes angeordnet werden kann. In Bezug zu der Längsrichtung der Drehachse der Gurtspule sind die Funktionsmodule hinter oder vor der Gurtspule angeordnet. Die weiteren Funktionsmodule neben der Gurtspule können in Bezug zu der Drehachse der Gurtspule axial in Reihe also hintereinander angeordnet werden, dass sie den Gurtwickel zur Außenseite gegebenenfalls nur geringfügig überragen und die längliche Ausbildung des Gurtaufrollers fortgesetzt und weiter verlängert wird.

Die Stützplatten können ein oder mehrere Funktionsmodule des Gurtaufrollers lagern, wobei die Stützplatten zwischen den Funktionsmodulen angeordnet sein können oder Teil eines Funktionsmoduls bzw. Teil eines Gehäuses eines Funktionsmoduls sein können. Die Stützplatten können zudem zu einer Versteifung des lasttragenden Gurtaufrollers genutzt werden. Die Stützplatten ermöglichen insbesondere eine längliche Formgebung des Gurtaufrollers mit in Reihe angeordneten Funktionsmodulen. Die Stützplatten sind vorzugsweise mit ihrer Flächennormalen parallel zur Drehachse der Gurtwelle bzw. zur Wickelachse ausgerichtet.

Die Rastlöcher in den Gehäusehälften können auch als Positionslöcher bezeichnet werden, da die Rastlöcher die vorgegebene Positionierung der Funktionsmodule bei der Montage und im normalen Betrieb sowie auch im Rückhaltefall ermöglichen. Rastlöcher können beispielsweise aus Blech ausgestanzt werden oder mittels eines Lasers ausgeschnitten werden. In einer bevorzugten Ausführungsform sind in den Gurtaufroller zwei parallel und beabstandet zueinander verlaufende Sitzholme entlang einer Einsteckachse einsteckbar und befestigbar. Die beiden Gehäusehälften des Gurtaufrollers erstrecken sich vorzugsweise über die gesamte Breite des Gurtaufrollers. Die Gehäusehälften können jeweils zwei Sitzholme, die die seitliche Sitzstruktur einer Rücklehne eines Fahrzeugsitzes auf beiden Seiten bilden, zumindest teilweise umschließen. Die zwei Gehäusehälften bilden vorzugweise zwei Aufnahmen im Gurtaufroller, in die zwei Sitzholme einsteckbar sind. Dies bedeutet wiederum, dass bei einer Montage der Gurtaufroller in einfacher Weise auf die Sitzholme einer Rückenlehne aufgesteckt werden kann. In vorteilhaften Ausführungsformen sind Durchgangslöcher in den Gehäusehälften vorgesehen, welche ferner eine einfache Befestigung von Sitzholmen mittels einer Verschraubung ermöglichen. Die gebildeten Aufnahmen für die Sitzholme ermöglichen eine Kraft- und/oder Momentenübertragung in den Richtungen, die von der Einsteckrichtung abweichen, so dass über große Kontaktflächen zwischen Sitzholmen und Gehäusehälften des Gurtaufrollers Kräfte übertragen werden können. Daher können Spannungsspitzen sowie die Belastung der Schraubverbindung reduziert werden. Insgesamt kann hierdurch eine steife, stabile und zugleich leichte Verbindung erreicht werden.

Gemäß der Erfindung sind die Sicken und/oder Versteifungen durch rinnenartige Versteifungen gebildet, an denen sich ein Funktionsmodul oder ein Abschnitt der Stützplatte einseitig oder zweiseitig parallel zur Wickelachse abstützt. Die rinnenartigen Versteifungen können beispielsweise durch Umform- und/oder Prägeprozesse in kostengünstiger Weise in ein Metallblech eingebracht werden.

Gemäß einer Weiterentwicklung wird vorgeschlagen, dass mindestens ein Gehäuseteil eine zu den Funktionsmodulen hin ausgeprägte geschlossene Sicke mit einem Ausschnitt aufweist, wobei in dem Ausschnitt der Sicke ein Abschnitt eines Funktionsmoduls abgestützt ist.

Die Form einer geschlossenen Sicke ermöglicht eine hohe Steifigkeit, wenn beispielsweise der Ausschnitt in der Mitte der Sicke angeordnet ist, so dass die durch den Ausschnitt zweigeteilte Sicke weiterhin stabil ist. Der Ausschnitt ermöglicht eine genaue Positionierung des darin abgestützten Abschnitts eines Funktionsmoduls. Zudem kann mittels des Ausschnitts erreicht werden, dass die Abstützung in zwei entgegengesetzte Richtungen, insbesondere in beide Richtungen entlang der Drehachse der Gurtwelle bzw. der Wickelachse der Gurtspule, erfolgen kann. Dabei ist die Kombination des Ausschnitts in der geschlossenen Sicke auch hinsichtlich des Montagevorgangs von Vorteil, da der Zusammenbau der Gehäusehälften bzw. der Funktionsmodule hierdurch durch eine Art Vorausrichtung des Funktionsmoduls bzw. der Stützplatte in der Sicke zu dem Ausschnitt vereinfacht wird.

Gemäß einer Weiterentwicklung wird vorgeschlagen, dass mindestens ein Rastloch in einem Gehäuseteil eine Fixierzunge aufweist. Eine Fixierzunge ermöglicht die Fixierung einer in dem Rastloch eingeführten Rastnase durch die federbelastete Verformung der Fixierzunge. Die Fixierzunge steht vorzugsweise soweit in dem Rastloch vor, dass die Wandstärke der Rastnase der Stützplatte eine Verformung der Fixierzunge beim Eingreifen in das Rastloch bewirkt. Dies ermöglicht eine einfache Fixierung bei der Montage, was die Montage der Funktionsmodule selbst vereinfacht, sowie den Einfluss von Fertigungstoleranzen verringert.

Es wird ferner vorgeschlagen, dass die Fixierzunge parallel zur Wickelachse ausgerichtet ist, wobei die Fixierzunge mit dem Zungenende von dem Funktionsmodul Gurtspule weg gerichtet ist.

Weiterhin wird vorgeschlagen, dass die zwei Gehäusehälften eine Mehrzahl von Rastlöchern aufweisen, welche jeweils eine Fixierzunge aufweisen, wobei alle Fixierzungen in den Rastlöchern der zwei Gehäusehälften mit dem Zungenende in die gleiche Richtung, vorzugsweise von dem Funktionsmodul Gurtspule weg gerichtet, ausgerichtet sind.

Es kann somit eine Montage der fixierten Rastnasen bzw. der Stützplatten in Bezug zu einem Funktionsmodul als Basis erfolgen. Die Mehrzahl der Rastlöcher kann für unterschiedliche Funktionsmodule und/oder Stützplatten vorgesehen sein. In einer möglichen Ausführungsform ist daher die Fixierzunge parallel zur Wickelachse und mit dem Zungenende zu dem Funktionsmodul Motor bzw. Elektromotor als Basis gerichtet. Ein Elektromotor als Funktionsmodul kann vorteilhaft am Ende einer axialen oder koaxialen Anordnung angesetzt sein, wobei der Elektromotor am anderen Ende gegenüber einer Gurtspule in dem Gurtaufroller positioniert sein kann. Neben der Mehrzahl von Rastlöchern mit Fixierzungen können auch weitere Rastlöcher ohne Fixierzungen in den zwei Gehäusehälften vorgesehen sein.

In einer vorteilhaften Ausführungsform weist die Fixierzunge eine konstante Breite auf. Es kann damit eine hohe Fixierwirkung erreicht werden. Die Breite der Zunge ist vorzugsweise kleiner als die Breite der Rastnase. Weiterhin können die Montagekräfte als auch die erreichbare Fixierwirkung unter anderem durch die Breite der Rastnase und das Übermaß der Zunge eingestellt werden.

Gemäß einer Weiterentwicklung wird vorgeschlagen, dass ein Funktionsmodul parallel zur Wickelachse verlaufende Laschen aufweist, wobei die Gehäusehälften jeweils mindestens eine offene Sicke aufweisen, in welche die Laschen des Funktionsmoduls gesteckt sind.

Dies ermöglicht eine Lagefixierung des Funktionsmoduls in mehreren Achsen bei gleichzeitig einfacher Montage durch Stecken des Funktionsmoduls in die zwei Gehäusehälften, was beispielsweise auch die Montage weiterer Funktionsmodule zwischen den beiden Gehäusehälften vereinfachen kann. In möglichen Ausführungsformen können die Laschen des Funktionsmoduls parallel zur Wickelachse der Gurtspule ausgerichtet und in korrespondierende, offene Sicken der zwei Gehäuseteile gesteckt sein.

Ein Motormodul bzw. ein Elektromotor als Funktionsmodul mit Laschen eignet sich besonders gut, weil das Motormodul in der Regel am Ende einer koaxialen Aufreihung von Funktionsmodulen angeordnet ist, was die Montage erleichtert. Das Funktionsmodul, welches in der Regel am anderen Ende einer koaxialen Anordnung vorgesehen ist, ist die Gurtspule, welche für die Anordnung von entsprechend ausgerichteten Laschen aufgrund des vorgesehenen Gurtwickels funktionsbedingt weniger geeignet ist.

In einer möglichen Ausführungsform kann mindestens ein Gehäuseteil parallel zur Wickelachse verlaufende Laschen aufweisen, welche in korrespondierende, offene Sicken eines Funktionsmoduls, welches vorzugsweise ein Motormodul oder ein Elektromotor ist, gesteckt sind.

In einer weiteren vorteilhaften Ausführungsform weist die Fixierzunge eine zum Zungenende verjüngende Breite auf. Hierdurch kann der initiale Widerstand beim Montieren verringert werden.

Gemäß einer Weiterentwicklung wird vorgeschlagen, dass sich ein Abschnitt eines Funktionsmoduls in wenigstens einer geschlossenen Sicke eines Gehäuseteils beidseitig parallel zur Wickelachse abstützt, wobei diese wenigstens eine geschlossene Sicke vom Funktionsmodul weg ausgeprägt ist. Dies kann den Zusammenbau der Gehäusehälften mit den Funktionsmodulen zudem durch eine Art Vorausrichtung des jeweiligen Funktionsmoduls und/oder gegebenenfalls einer entsprechenden Stützplatte vereinfachen.

Dies ist insbesondere vorteilhaft, wenn das Funktionsmodul ein Pyrostrafferrad aufweist, so dass die auftretenden Lasten bei einer Auslösung des Pyrostraffers flächig von einem Gehäuseteil aufgenommen werden können.

In einer vorteilhaften Ausführungsform ist wenigstens eine Sicke und/oder Versteifung durch eine senkrecht zu der Wickelachse ausgerichtete Rippe gebildet. Dies ermöglicht eine einfache Abstützung eines Funktionsmoduls und/oder einer Stützplatte unabhängig von Rastnasen. Insbesondere bei einer Ausprägung der Sicke und/oder Versteifung vom Funktionsmodul weg kann eine beidseitige Abstützung eines Funktionsmoduls parallel zur Wickelachse erreicht werden.

In einer vorteilhaften Ausführungsform weist der Gurtaufroller ein Funktionsmodul auf, an dem eine C-förmige Spange angeordnet ist, wobei jeweils ein Schenkel der C-förmigen Spange innen an einem der beiden Gehäusehälften anliegt, und ein Sitzholm in die Spange einsteckbar und mit der Spange und den beiden Gehäusehälften befestigbar ist.

Die Spange bildet daher vorzugsweise mit jedem Schenkel eine Kontaktfläche zu einem Gehäuseteil. Weiterhin bildet die Spange vorzugsweise an dem, insbesondere unter dem, Funktionsmodul der Gurtspule die Aufnahme, in die ein Sitzholm einsteckbar ist. Die beiden Gehäusehälften des Gurtaufrollers umschließen die C-förmige Spange bevorzugt von mehreren Seiten. Auf diese Weise können die Funktionsmodule, insbesondere das Funktionsmodul der Gurtspule, unmittelbar Kräfte in einen eingesteckten und befestigten Sitzholm einleiten. Dies ermöglicht vor allem im Rückhaltefall eine direkte Kraftübertragung zwischen einer blockierten Gurtspule und der weiteren Sitzstruktur, welche mit einem Fahrzeug verbunden ist.

In vorteilhaften Ausführungsformen sind Durchgangslöcher in der Spange korrespondierend zu den Durchgangslöchern in den Gehäusehälften vorgesehen, welche ferner eine einfache Befestigung eines Sitzholms mittels einer Verschraubung ermöglichen.

Gemäß einer Weiterentwicklung wird vorgeschlagen, dass ein Gehäuseteil in einer L-förmigen Kontur ausgeführt ist. Das Gehäuseteil ist mit zwei parallelen und voneinander beabstandeten Sitzholmen befestigbar.

Die L-förmige Kontur, welche sich vorzugsweise parallel zur Wickelachse der Gurtspule erstreckt, wirkt sich positiv auf die Steifigkeit des Gurtaufrollers aus und lässt sich in einfacher Weise aus Blech fertigen. Der Knick zwischen den beiden, vorzugsweise im Wesentlichen rechtwinklig zueinanderstehenden, Schenkeln der L-förmigen Kontur kann beispielsweise auch durch zwei Knicklinien erfolgen.

Die L-förmige Kontur eines Gehäuseteils ermöglicht insbesondere ein Stecken eines Funktionsmoduls mit zwei Laschen in eine offene Sicke an jeweils einem Schenkel der L-förmigen Kontur, wodurch die Befestigung des Funktionsmoduls in dem Gehäuse weiter verbessert wird.

Es wird weiterhin vorgeschlagen, dass ein Gehäuseteil als deckelförmige Kontur ausgeführt ist, mit einer Bauhöhe von weniger als 15 mm.

Das Gehäuseteil der deckelförmigen Kontur ist im Wesentlichen flach ausgeführt und erstreckt sich über die gesamte Breite des Gurtaufrollers. Zusammen mit dem Gehäuseteil in einer L-förmigen Kontur wird vorzugsweise eine U-förmige Kontur gebildet, in welcher die Funktionsmodule angeordnet sind. Die U-förmige Kontur ist in Richtung der vorgesehenen Aufnahme von Sitzholmen offen, d.h. das Gehäuse des Gurtaufrollers ist einer üblichen Einbausituation am oberen Ende einer Rücklehne eines Fahrzeugsitzes nach unten geöffnet.

Das Gehäuseteil mit der L-förmigen Kontur und das Gehäuseteil in der deckelförmigen Kontur können beispielsweise aus Metallblech mittels Stanzen und Umformen hergestellt sein.

Gemäß einer Weiterentwicklung wird vorgeschlagen, dass die beiden Gehäusehälften unmittelbar durch eine Steckverbindung mit Zungen und korrespondierenden Schlitzen verbunden sind.

Es kann hierdurch in einfacher Weise eine Kraftübertragung zwischen den beiden Gehäusehälften in mehreren Achsen über einen vergleichsweise langen Kontaktbereich, insbesondere entlang der Breite des Gurtaufrollers erreicht werden. Die Zungen und Schlitze können hierbei mit üblichen Blechbearbeitungsprozessen kostengünstig hergestellt werden.

In einer möglichen vorteilhaften Ausführungsform sind die Zungen parallel zur Einsteckachse der Sitzholme ausgerichtet. Dies ermöglicht eine gute formschlüssige Verbindung der zwei Gehäusehälften in allen von der Einsteckachse abweichenden Richtungen.

Es wird weiterhin eine Sitzstruktur eines Fahrzeugsitzes vorgeschlagen, wobei die Sitzstruktur zwei parallel und beabstandet zueinander verlaufende Sitzholme in einer Rückenlehne des Fahrzeugsitzes aufweist. Die Sitzholme sind in einen vorgeschlagenen lasttragenden Gurtaufroller eingesteckt und mit dem Gurtaufroller befestigt.

Der Gurtaufroller wird daher als strukturelle Querstrebe zwischen den senkrechten Sitzholmen der Rückenlehne lasttragend ausgeführt.

Gemäß einer Weiterentwicklung wird vorgeschlagen, dass die zwei Sitzholme jeweils mittels einer Schraube an dem Gurtaufroller befestigt sind, wobei die Schraube durch ein Durchgangsloch in dem Sitzholm und den zwei Gehäusehälften geführt ist.

Auf diese Weise kann eine einfache, stabile und kostengünstige Befestigung des Gurtaufrollers an den Sitzholmen erreicht werden. Weiterhin wird vorgeschlagen, dass zwischen den Gehäusehälften und zumindest einem Sitzholm eine C-förmige Spange eines Funktionsmoduls angeordnet ist, welche ein korrespondierendes Durchgangsloch für eine Befestigung mit einer Schraube zusammen mit den beiden Gehäusehälften und einem Sitzholm aufweist.

Die Erfindung wird im Folgenden anhand bevorzugter Ausführungsformen unter Bezugnahme auf die beigefügten Figuren erläutert. Dabei zeigt
- Fig. 1: einen lasttragenden Gurtaufroller in einer Explosionsdarstellung;
- Fig. 2: einen lasttragenden Gurtaufroller in einer Explosionsdarstellung in einer Rückansicht;
- Fig. 3: einen lasttragenden Gurtaufroller mit Sitzholmen in einer Explosionsdarstellung;
- Fig. 4: eine Aufsicht eines Gurtaufrollers in einer Explosionsdarstellung;
- Fig. 5: ein Rastloch mit Fixierzunge und eingesteckter Rastnase;
- Fig. 6: ein Rastloch mit einer weiteren Fixierzunge und eingesteckter Rastnase; und
- Fig. 7: ein Rastloch mit Fixierzunge und eingesteckter Rastnase in einer Seitenansicht.

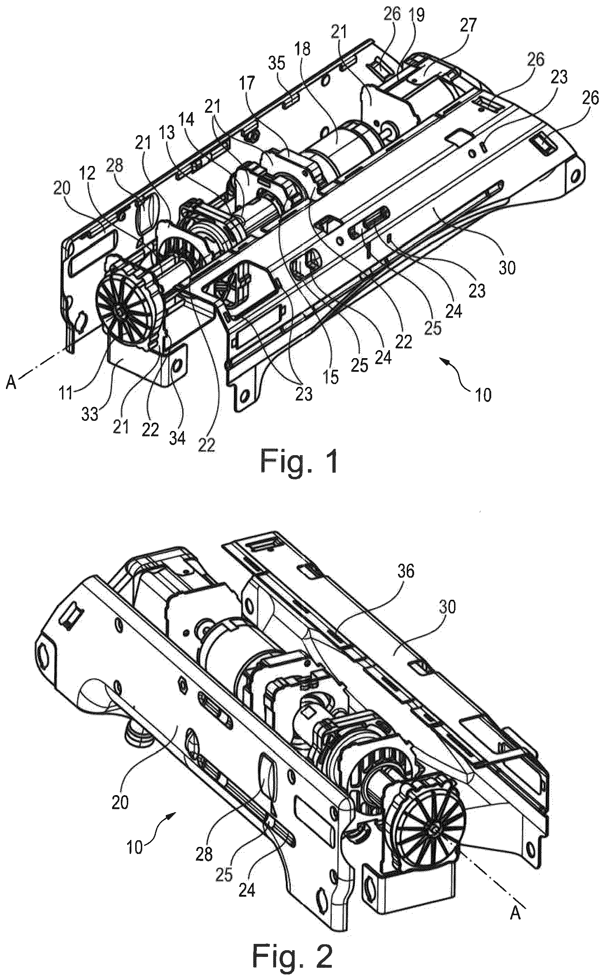

In Figur 1 ist ein Ausführungsbeispiel eines lasttragenden Gurtaufrollers 10 in einer Explosionsdarstellung gezeigt. Der Gurtaufroller 10 weist mehrere Funktionsmodule 11, 12, 13, 14, 15, 16, 17, 18, 19 auf, welche hintereinander in einer gestapelten Anordnung aufgebaut sind. Hierdurch ergibt sich eine längliche Bauform, welche eine Anordnung des Gurtaufrollers in dem oberen Teil einer Rückenlehne eines Fahrzeugsitzes ermöglicht. Die Funktionsmodule 11, 12, 13, 14, 15, 16, 17, 18, 19 sind beispielsweise eine Gurtspule 12 für einen Sicherheitsgurt (nicht dargestellt) an dem eine Triebfeder 11 vorgesehen ist. Die Gurtspule 12 weist eine Wickelachse A auf, um die ein Sicherheitsgurt zu einem Gurtwickel aufwickelbar ist. Weiterhin ist ein Strafferantriebsrad 13 vorgesehen, mit dem eine pyrotechnische Gurtstraffung erreicht werden kann. Eine Kraftbegrenzungsvorrichtung 14 (LLA) ist neben einer zugehörigen Schalteinrichtung 15 angeordnet. Ein Profilkopf 16 mit Blockierklinke ist axial neben einem Rahmen 17 mit Verzahnung zum Blockieren der Blockierklinke vorgesehen. Weiter kann axial beispielsweise ein Getriebe 18, insbesondere ein Planetengetriebe 18 vorgesehen sein, an dem ein Motor 19, insbesondere ein Elektromotor, vorgesehen ist.

Mehrere Funktionsmodule weisen integrale oder zwischen zwei Funktionsmodulen angesetzte Stützplatten 21 auf, die die Funktionsmodule in einem Gehäuse lagern, welches im Wesentlichen aus zwei Gehäusehälften 20, 30 gebildet wird. Die beiden Gehäusehälften 20,30 sind jeweils seitlich von der Wickelsachse A angeordnet und umschließen die Funktionsmodule 11, 12, 13, 14, 15, 16, 17, 18, 19, so dass diese in den zwei Gehäusehälften 20, 30 gehalten und gelagert werden. Die Gehäusehälften 20, 30 ergänzen sich wenigstens abschnittsweise zu einem vollumfänglich geschlossenen Profil, welche eine Abstützung der Funktionsmodule über ihren gesamten Umfang ermöglicht.

Die Stützplatten 21 weisen mehrere Rastnasen 22 auf, die im zusammengebauten Zustand in Rastlöcher 23, welche in den beiden Gehäusehälften 20, 30 vorgesehen sind, eingreifen und die jeweilige Stützplatte 21 axial entlang der Wickelachse A festlegen. Die Stützplatte 21 kann sich über ihre umlaufenden Kanten in Richtungen senkrecht zur Wickelachse A an Gehäuseinnenseiten der Gehäuseteile 20, 30 abstützen.

Neben den Rastlöchern 23 zur Fixierung der Funktionsmodule 11, 12, 13, 14, 15, 16, 17, 18, 19 weisen die zwei Gehäusehälften 20, 30 nach innen, d.h. zu den Funktionselementen hin ausgeformte Sicken 24 auf, die von außen betrachtet rinnenartigen Versteifungen bilden, siehe auch Figur 2. Die nach innen ausgeformten Sicken 24 können Ausschnitte 25 aufweisen, in denen sich ein Abschnitt oder ein Teil eines Funktionsmoduls 13, 15 in die beiden Richtungen parallel zur Wickelachse A abstützt. Diese Sicken 24 sind beispielsweise rinnenartig parallel zur Wickelachse A ausgerichtet. Weiterhin handelt es sich bei diesen Sicken 24 um geschlossene Sicken 24, welche an ihren axialen Enden keine Öffnung oder Ausstanzung aufweisen. Gleichzeitig dienen die Sicken 24 als Versteifung der jeweiligen Gehäusehälfte 20, 30.

Ferner ist an einer der Gehäusehälften 20 eine geschlossene Sicke 28 vorgesehen, welche senkrecht zur Wickelachse A ausgerichtet ist. Die Sicke 28 ist nach außen, d.h. von den Funktionsmodulen bzw. dem Funktionsmodul weg ausgeformt. In der Sicke 28 kann sich ein Funktionsmodul 13 sowohl in beide Richtungen entlang der Wickelachse A als auch quer zur Wickelachse A abstützen.

An dem Funktionsmodul Motor 19 sind drei parallel zur Wickelachse A ausgerichtete Laschen 27 vorgesehen, welche in Richtung der Gurtspule 12 zeigen. Diese Laschen 27 sind in drei korrespondierende offene Sicken 26 eingesteckt, die an den beiden Gehäusehälften 20, 30 vorgesehen sind.

Die Gurtspule 12 umfasst eine C-förmige Spange 33, die am Rahmen der Gurtspule 12 und/oder an einer Stützplatte 21 der Gurtspule 12 angesetzt ist. Die Spange 33 weist zwei Schenkel 34 auf, die jeweils an der Gehäuseinnenseite der Gehäusehälften 20, 30 anliegen. In möglichen Ausführungsbeispielen kann das Funktionsmodul 19 auf der anderen Seite des Gurtaufrollers 10 ebenfalls eine entsprechende C-förmige Spange 33 aufweisen.

Die Gehäusehälften 20, 30 können mittels Steckverbindungen von Zungen 35 und korrespondierenden Schlitzen 36 an der anderen Gehäusehälfte 20, 30 durch Formschluss verbunden sein. Wie in den Darstellungen der Figuren zu entnehmen erfolgt dieser Formschluss bevorzugt auf der Oberseite des Gurtaufrollers 10.

Eine Gehäusehälfte 30 ist L-förmig bzw. weist eine L-förmige Kontur auf, welche in diesem Ausführungsbeispiel im Bereich der Gurtspule 12 eine Öffnung für einen Sicherheitsgurt (nicht dargestellt) aufweist. Die andere Gehäusehälfte 20 ist als Deckel bzw. als deckelförmige Kontur ausgeführt und ist daher grundsätzlich flacher als die Gehäusehälfte 30 mit den beiden Schenkeln der L-förmigen Kontur.

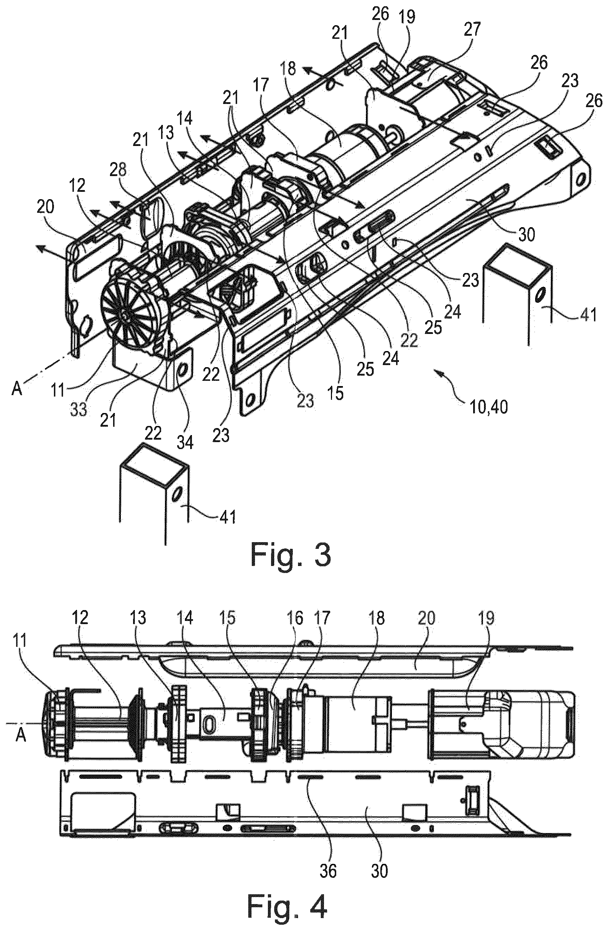

Figur 3 zeigt den lasttragenden Gurtaufroller 10 mit Teilen einer Sitzstruktur 40 in Form von zwei Sitzholmen 41 einer Rückenlehne eines Fahrzeugsitzes. Der Gurtaufroller 10 wird hierbei von oben und senkrecht zur Wickelachse A auf die Sitzholme 41 aufgesteckt und kann mit entsprechenden Durchgangsbohrungen mit diesen verschraubt werden, wodurch der Gurtaufroller 10 ein lasttragendes Element der Sitzstruktur 40 bildet. Die C-förmige Spange 33 oder die Spangen 33 sind zwischen den Gehäuseinnenseiten der beiden Gehäusehälften 20, 30 und einem Sitzholm 41 angeordnet und werden gemeinsam mit diesen verschraubt.

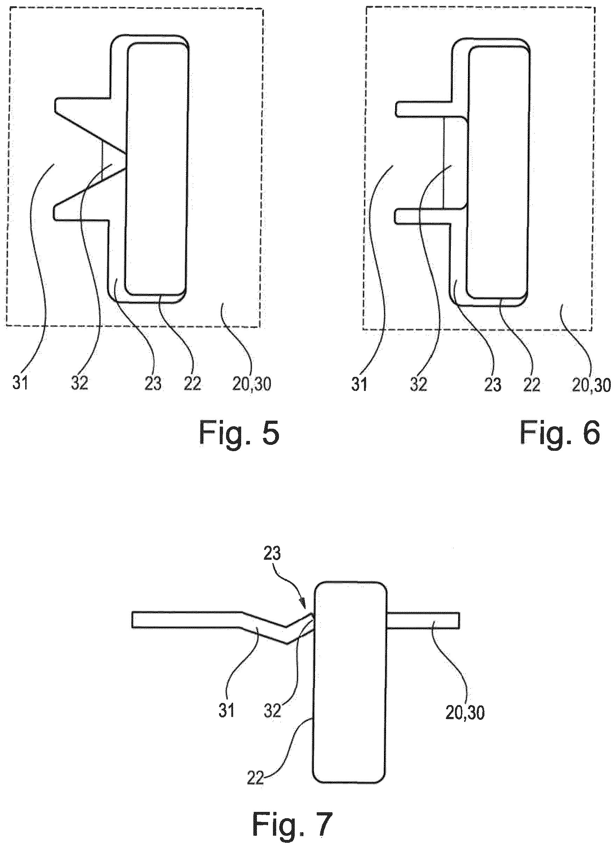

Die Figuren 5, 6 zeigen Rastlöcher 23 in einer Draufsicht in einer Gehäusehälfte 20, 30, in die eine Rastnase 22 eingesteckt ist. In den beiden Ausführungsbeispielen sind Fixierzungen 31 vorgesehen, welche gegen die Rastnase 22 drücken, wodurch die Rastnase 22 an den gegenüberliegenden Rand des Rastloches 23 gepresst wird. Die Rastnase 22 an der Stützplatte ist somit in Auszugsrichtung aus dem Rastloch 23 gesichert, was die Montage vereinfacht und Klappergeräusche vermeidet. Insbesondere kann mittels der Fixierzungen 31 in den Rastlöchern 23 ein Toleranzausgleich bei der Montage der axial gestapelten Funktionsmodule 11, 12, 13, 14, 15, 16, 17, 18, 19 erreicht werden. In einem vorteilhaften Ausführungsbeispiel zeigen alle Rastlöcher 23 in eine Richtung, welche in Richtung des Funktionsmoduls 19 am anderen Ende gegenüber der Gurtspule 12 zeigen, so dass ein Toleranzausgleich zu einer Basis erfolgen kann.

Die Rastzunge 31 im Ausführungsbeispiel der Figur 5 verjüngt sich zum Kontakt mit der Rastnase 22 hin, so dass die Fixierzunge 31 zum Zungenende 32 deutlich schmaler ist als die Basis der Rastzunge 31. In Figur 6 ist eine Rastzunge 31 mit konstanter Breite dargestellt.

Figur 7 zeigt eine Schnittansicht der Ausführungsbeispiele der Figuren 5 und 6, in der die Auslenkung und Verformung der Fixierzunge 31, welche das Andrücken der Fixierzunge 31 mit dem Zungenende 32 auf die Rastnase 22 bewirkt.

Insbesondere sind die Fixierzungen 31 einheitlich so ausgerichtet, dass sie die Funktionsmodule 11, 12, 13, 14, 15, 16, 17, 18, 19 alle in dieselbe Richtung zu einer kompakten Bauform drängen. Dies ist im vorliegenden Ausführungsbeispiel die Richtung hin zu dem endseitig an dem Gurtaufroller fixierten Elektromotor 19.

Die Schalteinrichtung 15 für die Kraftbegrenzungseinrichtung 14 umfasst hier eine vergleichsweise breite Kunststoffplatte mit einer Breite von ca. 2 cm und kann dadurch aufgrund dieser Breite besonders gut winklig zwischen den beiden Gehäusehälften 20, 30 ausgerichtet werden. Zusätzlich kann die Schalteinrichtung 15 nach dem Ausrichten durch Schrauben in der ausgerichteten Stellung fixiert werden. Die Verschraubung erfolgt dabei bevorzugt von außen.

## Patentansprüche

1. Lasttragender Gurtaufroller (10) für eine Sitzstruktur (40) eines Fahrzeugsitzes, wobei
- der Gurtaufroller (10) zwei Gehäusehälften (20, 30) aufweist, zwischen denen Funktionsmodule (11,12,13,14,15,16,17,18,19) des Gurtaufrollers (10) angeordnet sind, wobei
- ein Funktionsmodul (11) eine Gurtspule (12) mit einer Wickelachse (A) ist, wobei
- an den Funktionsmodulen (11,12,13,14,15,16,17,18,19) eine Mehrzahl von senkrecht zur Wickelachse (A) orientierter Stützplatten (21) vorgesehen ist, welche jeweils mindestens zwei Rastnasen (22) aufweisen, wobei die Rastnasen (22) in korrespondierende Rastlöcher (23) in den zwei Gehäusehälften (20,30) eingreifen, **dadurch gekennzeichnet, dass**
- die Gehäusehälften (20,30) zu den Funktionsmodulen (11,12,13,14,15,16,17,18,19) gerichtete Sicken (24) und/oder Versteifungen aufweisen, wobei sich wenigstens ein Abschnitt eines Funktionsmoduls (13,15) und/oder ein Abschnitt einer Stützplatte (21) an den Sicken (24) und/oder Versteifungen in mindestens einer Richtung parallel zur Wickelachse (A) abstützt, wobei die Sicken (24) und/oder Versteifungen durch rinnenartige Versteifungen gebildet sind, an denen sich ein Funktionsmodul (13,15) oder ein Abschnitt der Stützplatte (21) einseitig oder zweiseitig parallel zur Wickelachse (A) abstützt.

2. Gurtaufroller (10) nach Anspruche 1, **dadurch gekennzeichnet, dass** mindestens ein Gehäuseteil (20,30) eine zu den Funktionsmodulen (13,15) hin ausgeprägte geschlossene Sicke (24) mit einem Ausschnitt (25) aufweist, wobei in dem Ausschnitt (25) der Sicke (24) ein Abschnitt eines Funktionsmoduls (13,15) abgestützt ist.

3. Gurtaufroller (10) nach einem der Ansprüche 1 oder 2,
**dadurch gekennzeichnet, dass** mindestens ein Rastloch (23) eine Fixierzunge (31) aufweist.

4. Gurtaufroller (10) nach Anspruch 3, **dadurch gekennzeichnet, dass** die Fixierzunge (31) parallel zur Wickelachse (A) ausgerichtet ist, wobei die Fixierzunge (31) mit dem Zungenende (32) von dem Funktionsmodul Gurtspule (12) weg gerichtet ist.

5. Gurtaufroller (10) nach Anspruch 3 oder 4, **dadurch gekennzeichnet, dass** die zwei Gehäusehälften (20,30) eine Mehrzahl von Rastlöchern (23) aufweisen, welche jeweils eine Fixierzunge (31) aufweisen, wobei alle Fixierzungen (31) in den Rastlöchern (23) der zwei Gehäusehälften (20,30) mit dem Zungenende (32) in die gleiche Richtung ausgerichtet sind.

6. Gurtaufroller (10) nach einem der Ansprüche 3 bis 5,
**dadurch gekennzeichnet, dass** die Fixierzunge (31) eine konstante Breite aufweist.

7. Gurtaufroller (10) nach einem der Ansprüche 3 bis 6,
**dadurch gekennzeichnet, dass** die Fixierzunge (31) eine zum Zungenende (32) verjüngende Breite aufweist.

8. Gurtaufroller (10) nach einem der Ansprüche 1 bis 7,
**dadurch gekennzeichnet, dass** ein Funktionsmodul (19) parallel zur Wickelachse (A) verlaufende Laschen (27) aufweist, wobei die Gehäusehälften (20,30) jeweils mindestens eine offene Sicke (26) aufweisen, in welche die Laschen (27) des Funktionsmoduls (19) gesteckt sind.

9. Gurtaufroller (10) nach einem der Ansprüche 1 bis 8, **dadurch gekennzeichnet, dass** sich ein Abschnitt eines Funktionsmoduls (13) in wenigstens einer geschlossenen Sicke (28) eines Gehäuseteils (20,30) beidseitig abstützt, wobei diese wenigstens eine geschlossene Sicke vom Funktionsmodul (13) weg ausgeprägt ist.

10. Gurtaufroller (10) nach einem der Ansprüche 1 bis 9, **dadurch gekennzeichnet, dass** wenigstens eine Sicke (28) und/oder Versteifung durch eine senkrecht zu der Wickelachse (A) ausgerichtete Rippe gebildet ist.

11. Gurtaufroller (10) nach einem der Ansprüche 1 bis 10, **dadurch gekennzeichnet, dass** der Gurtaufroller (10) ein Funktionsmodul (12) aufweist, an dem eine C-förmige Spange (33) angeordnet ist, wobei jeweils ein Schenkel (34) der C-förmigen Spange (33) innen an einem der beiden Gehäusehälften (20,30) anliegt, und ein Sitzholm (41) in die Spange (33) einsteckbar und mit der Spange (33) und den beiden Gehäusehälften (20,30) befestigbar ist.

12. Gurtaufroller (10) nach einem der Ansprüche 1 bis 11, **dadurch gekennzeichnet, dass** ein Gehäuseteil (30) in einer L-förmigen Kontur ausgeführt ist.

13. Gurtaufroller (10) nach einem der Ansprüche 1 bis 12, **dadurch gekennzeichnet, dass** ein Gehäuseteil (20) als deckelförmige Kontur ausgeführt ist, mit einer Bauhöhe von weniger als 15 mm.

14. Gurtaufroller (10) nach einem der Ansprüche 1 bis 13, **dadurch gekennzeichnet, dass** die beiden Gehäusehälften (20,30) unmittelbar durch eine Steckverbindung mit Zungen (35) und korrespondierenden Schlitzen (36) verbunden sind.

## Claims

1. Load-bearing belt retractor (10) for a seat structure (40) of a vehicle seat,
- the belt retractor (10) having two housing halves (20, 30), between which are arranged functional modules (11,12,13,14,15,16,17,18,19) of the belt retractor (10),
- one functional module (11) being a belt spool (12) having a winding axis (A),
- a plurality of support plates (21) oriented perpendicularly to the winding axis (A) being provided on the functional modules (11,12,13,14,15,16,17,18,19), each of said support plates having at least two locking noses (22), the locking noses (22) engaging in corresponding locking holes (23) in the two housing halves (20,30), **characterized in that**
- the housing halves (20,30) have beads (24) and/or stiffeners directed toward the functional modules (11,12,13,14,15,16,17,18,19), at least one portion of a functional module (13,15) and/or a portion of a support plate (21) being supported on the beads (24) and/or stiffeners in at least one direction parallel to the winding axis (A), the beads (24) and/or stiffeners being formed by channel-like stiffeners on which a functional module (13,15) or a portion of the support plate (21) is supported on one side or on both sides parallel to the winding axis (A).

2. Belt retractor (10) according to claim 1, **characterized in that** at least one housing part (20,30) has a closed bead (24) which is stamped toward the functional modules (13,15) and which has a cutout (25), a portion of a functional module (13,15) being supported in the cutout (25) of the bead (24).

3. Belt retractor (10) according to either claim 1 or claim 2,
**characterized in that** at least one locking hole (23) has a fixing tongue (31).

4. Belt retractor (10) according to claim 3, **characterized in that** the fixing tongue (31) is oriented parallel to the winding axis (A), the tongue end (32) of the fixing tongue (31) being directed away from the belt spool functional module (12).

5. Belt retractor (10) according to either claim 3 or claim 4,
**characterized in that** the two housing halves (20,30) have a plurality of locking holes (23) which each have a fixing tongue (31), the tongue ends (32) of all the fixing tongues (31) in the locking holes (23) of the two housing halves (20,30) being oriented in the same direction.

6. Belt retractor (10) according to any of claims 3 to 5,
**characterized in that** the fixing tongue (31) has a constant width.

7. Belt retractor (10) according to any of claims 3 to 6,
**characterized in that** the fixing tongue (31) has a width which tapers toward the tongue end (32).

8. Belt retractor (10) according to any of claims 1 to 7,
**characterized in that** a functional module (19) has tabs (27) extending parallel to the winding axis (A), the housing halves (20,30) each having at least one open bead (26), into which the tabs (27) of the functional module (19) are inserted.

9. Belt retractor (10) according to any of claims 1 to 8,
**characterized in that** a portion of a functional module (13) is supported on both sides in at least one closed bead (28) of a housing part (20,30), said at least one closed bead being stamped away from the functional module (13).

10. Belt retractor (10) according to any of claims 1 to 9,
**characterized in that** at least one bead (28) and/or stiffener is formed by a rib oriented perpendicularly to the winding axis (A).

11. Belt retractor (10) according to any of claims 1 to 10, **characterized in that** the belt retractor (10) has a functional module (12) on which a C-shaped clip (33) is arranged, one leg (34) of the C-shaped clip (33) resting against the inside of one of the two housing halves (20,30), and a seat bar (41) being able to be inserted into the clip (33) and to be fastened to the clip (33) and to the two housing halves (20,30).

12. Belt retractor (10) according to any of claims 1 to 11,
**characterized in that** one housing part (30) is designed as an L-shaped profile.

13. Belt retractor (10) according to any of claims 1 to 12,
**characterized in that** one housing part (20) is designed as a lid-shaped profile, having an overall height of less than 15 mm.

14. Belt retractor (10) according to any of claims 1 to 13,
**characterized in that** the two housing halves (20,30) are directly connected by an insertion connection with tongues (35) and corresponding slots (36).

## Revendications

1. Enrouleur de ceinture (10) de transport de charge pour une structure de siège (40) d'un siège de véhicule, dans lequel
- l'enrouleur de ceinture (10) présente deux moitiés de boîtier (20, 30) entre lesquelles sont disposés des modules de fonction (11, 12, 13, 14, 15, 16, 17, 18, 19) de l'enrouleur de ceinture (10), dans lequel
- un module de fonction (11) est une bobine de ceinture (12) comportant un axe d'enroulement (A), dans lequel
- il est prévu, sur les modules de fonction (11, 12, 13, 14, 15, 16, 17, 18, 19), une pluralité de plaques d'appui (21) orientées perpendiculairement à l'axe d'enroulement (A), lesquelles plaques d'appui présentent respectivement au moins deux ergots d'encliquetage (22), dans lequel les ergots d'encliquetage (22) se mettent en prise avec des trous d'encliquetage (23) correspondants dans les deux moitiés de boîtier (20, 30), **caractérisé en ce que**
- les moitiés de boîtier (20, 30) présentent des moulures (24) et/ou des renforts orientés vers les modules de fonction (11, 12, 13, 14, 15, 16, 17, 18, 19), dans lequel au moins une section d'un module de fonction (13, 15) et/ou une section d'une plaque d'appui (21) s'appuient sur les moulures (24) et/ou les renforts dans au moins une direction parallèle à l'axe d'enroulement (A), dans lequel les moulures (24) et/ou les renforts sont formés par des renforts en forme de gouttière, sur lesquels un module de fonction (13, 15) ou une section de la plaque d'appui (21) s'appuie d'un côté ou des deux côtés parallèlement à l'axe d'enroulement (A).

2. Enrouleur de ceinture (10) selon la revendication 1,
**caractérisé en ce qu'**au moins une partie de boîtier (20, 30) présente une moulure (24) fermée, accentuée en direction des modules de fonction (13, 15) et comportant une découpe (25), dans lequel une section d'un module de fonction (13, 15) s'appuie dans la découpe (25) de la moulure (24).

3. Enrouleur de ceinture (10) selon l'une des revendications 1 ou 2,
**caractérisé en ce qu'**au moins un trou d'encliquetage (23) présente une languette de fixation (31).

4. Enrouleur de ceinture (10) selon la revendication 3, **caractérisé en ce que** la languette de fixation (31) est orientée parallèlement à l'axe d'enroulement (A), dans lequel la languette de fixation (31) est orientée avec l'extrémité de languette (32) à l'opposé du module de fonction bobine de ceinture (12).

5. Enrouleur de ceinture (10) selon la revendication 3 ou 4,
**caractérisé en ce que** les deux moitiés de boîtier (20, 30) présentent une pluralité de trous d'encliquetage (23) qui présentent respectivement une languette de fixation (31), dans lequel toutes les languettes de fixation (31) dans les trous d'encliquetage (23) des deux moitiés de boîtier (20, 30) sont orientées avec l'extrémité de languette (32) dans la même direction.

6. Enrouleur de ceinture (10) selon l'une des revendications 3 à 5,
**caractérisé en ce que** la languette de fixation (31) présente une largeur constante.

7. Enrouleur de ceinture (10) selon l'une des revendications 3 à 6,
**caractérisé en ce que** la languette de fixation (31) présente une largeur qui se rétrécit vers l'extrémité de languette (32).

8. Enrouleur de ceinture (10) selon l'une des revendications 1 à 7,
**caractérisé en ce qu'**un module de fonction (19) présente des pattes (27) s'étendant parallèlement à l'axe d'enroulement (A), dans lequel les moitiés de boîtier (20, 30) présentent respectivement au moins une moulure ouverte (26) dans laquelle sont enfichées les pattes (27) du module de fonction (19).

9. Enrouleur de ceinture (10) selon l'une des revendications 1 à 8,
**caractérisé en ce qu'**une section d'un module de fonction (13) s'appuie des deux côtés dans au moins une moulure fermée (28) d'une partie de boîtier (20, 30), dans lequel cette au moins une moulure fermée est accentuée en s'éloignant du module de fonction (13).

10. Enrouleur de ceinture (10) selon l'une des revendications 1 à 9,
**caractérisé en ce qu'**au moins une moulure (28) et/ou un renfort sont formés par une nervure orientée perpendiculairement à l'axe d'enroulement (A).

11. Enrouleur de ceinture (10) selon l'une des revendications 1 à 10,
**caractérisé en ce que** l'enrouleur de ceinture (10) présente un module de fonction (12) sur lequel est disposée un fermoir (33) en forme de C, dans lequel respectivement une aile (34) du fermoir (33) en forme de C s'applique à l'intérieur contre l'une des deux moitiés de boîtier (20, 30), et un longeron de siège (41) peut être enfiché dans le fermoir (33) et fixé au fermoir (33) et aux deux moitiés de boîtier (20, 30).

12. Enrouleur de ceinture (10) selon l'une des revendications 1 à 11, **caractérisé en ce qu'**une partie de boîtier (30) est réalisée avec un contour en forme de L.

13. Enrouleur de ceinture (10) selon l'une des revendications 1 à 12,
**caractérisé en ce qu'**une partie de boîtier (20) est réalisée sous la forme d'un contour en forme de couvercle, comportant une hauteur inférieure à 15 mm.

14. Enrouleur de ceinture (10) selon l'une des revendications 1 à 13,
**caractérisé en ce que** les deux moitiés de boîtier (20, 30) sont reliées directement par un raccord enfichable comportant des languettes (35) et des fentes correspondantes (36).
